# EUROPÄISCHE PATENTSCHRIFT

(11) **EP 2 982 243 B1**
(45) Veröffentlichungstag und Bekanntmachung des Hinweises auf die Patenterteilung: **31.01.2018**
(21) Anmeldenummer: 15401080.5
(22) Anmeldetag: 03.08.2015
(51) Int. Cl.: A01M 7/00

(54) **VORRICHTUNG UND VERFAHREN ZUR BEWEGUNGSSTEUERUNG EINES VERTEILERGESTÄNGES EINER LANDWIRTSCHAFTLICHEN VERTEILMASCHINE**
DEVICE AND METHOD FOR CONTROLLING THE MOTION OF A DISTRIBUTION ROD SYSTEM OF AN AGRICULTURAL DISTRIBUTOR
DISPOSITIF ET PROCEDE DE COMMANDE DE MOUVEMENT D'UNE RAMPE D'UN DISPOSITIF D'EPANDAGE AGRICOLE

(30) Priorität: 05.08.2014 DE 102014111090
(43) Veröffentlichungstag der Anmeldung: 10.02.2016
(73) Patentinhaber: Amazonen-Werke H. Dreyer GmbH & Co. KG, 49205 Hasbergen (DE)
(72) Erfinder: Borchert, Anna-Gret, 49090 Osnabrück (DE)

(56) Entgegenhaltungen:
- EP-A1- 0 100 127
- DE-A1- 10 054 285
- DE-U1- 20 018 716
- US-A- 4 646 972

## Beschreibung

Die vorliegende Erfindung betrifft eine Vorrichtung und ein Verfahren zur Bewegungssteuerung eines Verteilgestänges einer landwirtschaftlichen Verteilmaschine gemäß der Oberbegriffe der unabhängigen Patentansprüche 1 und 11.

Feldspritzen, dies gilt sowohl für selbstfahrende als auch an Zugfahrzeuge wie Traktoren angehängte oder angebaute Feldspritzen, weisen mit ihrem Verteilergestänge, welches zur Verteilung des vorgesehenen Mittels dient, eine sehr große Arbeitsbreite, teilweise über 35 m, auf.

Auf Grund der üblicherweise im Zentrum des Verteilergestänges realisierten Befestigung am Rahmen der Feldspritze, kommt es zu einer starken elastischen Verbiegung des Gestänges, zu einem Aufschwingen oder zu Pendelbewegungen um das Zentrum desselben bei Beschleunigungen der Feldspritze. Die Beschleunigung, welche die Kräfte auf das Gestänge verursacht, können beispielsweise durch das Anfahren oder Abbremsen des Arbeitsgerätes, das Überfahren von Unebenheiten, wie Schlaglöchern oder Ackerfurchen, das Schwanken der Spritzbrühe im Tank der Feldspritze oder Kurvenfahrten hervorgerufen werden. Das Verbiegen und die unkontrollierte Bewegung der Seiten des Spritzgestänges, die durch die Beschleunigung hervorgerufen wird, versursacht eine unerwünschte ungleichmäßige Verteilung des mit der Feldspritze auszubringenden Mittels. Um diesem zu begegnen und die unkontrollierte Pendelbewegung des Gestänges der Feldspritze zu verhindern, sind aus dem Stand der Technik verschiedene Vorschläge bekannt.

Nach DE 200 18 716 U1 kann das Schwingen des Gestänges der Feldspritze um eine senkrecht zur Fahrtrichtung angeordnete vertikale Achse unterbunden oder minimiert werden, indem das Spritzgestänge pendelnd am Rahmen befestigt und über Dämpfungselemente mit dem Rahmen der Feldspritze gekoppelt wird.

Eine zusätzliche Dämpfung und Kompensation einer Bewegung des Gestänges der Feldspritze um eine in Fahrtrichtung angeordnete Achse ist in DE 10 2007 025 751 A1 mit Hilfe von zwei doppelwirkenden Hydraulikzylindern realisiert. EP 2 591 657 A1 schlägt vor, das Gestänge der Feldspritze in dessen Schwerpunkt mit dem Rahmen um eine in Fahrrichtung angeordnete Achse drehbar zu Verbinden und so ein Schwingen des Spritzgestänges um diese Achse zu verhindern. Zusätzlich ist vorgesehen, ein Mittel zum Einstellen der Gestängeneigung parallel zur Geländeneigung des zu befahrenden Untergrundes zu nutzen.

Nicht geeignet sind obige Maßnahmen um statt einer Drehbewegung oder Pendelbewegung des Verteilergestänges der Feldspritze eine Schwingbewegung in Fahrtrichtung desselben zu verhindern. Hierbei bewegen sich die gegenüberliegenden Seiten des Gestänges relativ zum Zentrum des Gestänges zumindest annähernd phasengleich oder anders ausgedrückt gleichzeitig in gleicher Richtung in und entgegen der Fahrtrichtung der Feldspritze. Ursache solcher Bewegungen können, wie oben erwähnt, beispielsweise die durch das Anfahren, Erhöhen der Geschwindigkeit der Arbeitsmaschine oder Abbremsen hervorgerufenen Beschleunigungen sein. Es können aber auch Wankbewegungen der Feldspritze auf Grund von Unebenheiten des Untergrunds oder eines schwankenden Flüssigkeitspegels der Spritzbrühe im Inneren des Feldspritzentanks oder sonstige zur Anregung einer solchen Bewegung geeignete Ursachen der Bewegung des Spritzgestänges vorliegen.

Die zuvor aufgeführten Ausgestaltungen sind geeignet Dreh- oder Pendelbewegungen um die Aufhängung des Verteilergestänges der Feldspritze zu dämpfen oder zu verhindern, nicht aber etwaig auftretende Schwingbewegungen. Eine Dämpfung der beschriebenen Schwingbewegung des Gestänges der Feldspritze ist in DE 100 54 285 mit Hilfe von Stellgliedern realisiert, welche auf beiden Seiten der Feldspritze zwischen deren Rahmen und dem Verteilergestänge angebracht sind und mit Hilfe der von Sensoren erfassten Position des Gestänges relativ zu seiner Ruhelage angesteuert werden.

Vorteilhafter wäre es durch ein kontrolliertes Bewegen des Gestänges der Feldspritze relativ zum Rahmen das Auftreten der Beschleunigungskräfte zu verhindern oder zu minimieren. Eine entsprechende, wenn auch nachteilsbehaftete Technik, die das Auftreten einer solchen Bewegung verhindert, realisiert mit Hilfe von Schwingungstilgern, ist allein in der DE 10 2008 007 312 A1 offenbart. Die Minimierung von auftretenden Schwingbewegungen mit Hilfe eines Schwingungstilgers ist jedoch kontruktiv überaus anspruchsvoll, da die Tilgerfrequenz exakt auf die Resonanzfrequenz des Verteilergestänges abgestimmt werden muss. Zudem müsste zumindest jeweils ein Tilger an den beiden äußeren Enden des Verteilergestänges angebracht werden, was zu einem zusätzlichen platzraubenden Bauteil und damit auch einer unvorteilhaften Erhöhung der Masse am äußersten Ende des Gestänges führen würde. Ein weiterer Nachteil der Schwingungsminimierung mit Hilfe von Schwingungstilgern ist die Tatsache, dass lediglich ein schmales Frequenzband durch das Anbringen von Schwingungstilgern gedämpft wird, Frequenzen die außerhalb dieses Bandes liegen können dagegen sogar verstärkt werden.

Aufgabe der vorliegenden Erfindung ist es dementsprechend ein Biegen und/oder Aufschwingen des Verteilgestänges einer landwirtschaftlichen Feldspritze hervorgerufen durch Beschleunigungen der Feldspritze zu dämpfen oder zu verhindern.

Dies wird durch eine Bewegungsvorrichtung gemäß dem Oberbegriff des Anspruchs 1 zur Dämpfung und/oder Verhinderung von elastischen Gestängebiegungen und/oder Schwingungen sowie durch ein Verfahren zur Steuerung einer solchen Bewegungsvorrichtung gemäß dem Oberbegriff des Anspruchs 11 erreicht, welche zwischen dem Rahmen und dem Verteilergestänge angeordnet ist. Hierdurch kann auf einfache und platzsparende Art und Weise ein Aufschwingen und/oder elastisches Biegen des Verteilergestänges verhindert werden.

Erreicht wird kann dies, indem eine Abstandsänderung zwischen Verteilergestänge und Rahmen, vorgenommen durch ein oder mehrere Aktoren erfolgt. Hierbei kann zum Beispiel die Abstandsänderung auch durch eine entsprechende Krafteinwirkung auf den Fußpunkt einer zwischen Verteilergestänge und Rahmen angebrachten Spiralfeder erfolgen.

Die Einstellung des Abstands zwischen Verteilergestänge und Rahmen kann durch verschiedene Arten von Aktoren, wie beispielsweise Hydraulikzylinder, Pneumatikzylinder, fluidischen Muskeln, Elektromotoren oder Hydraulikmotoren und dergleichen, erfolgen.

In einer vorteilhaften Weiterbildung erfolgt die Minimierung der elastischen Verbiegung des Verteilergestänges durch die mittels Regulation der Federfußpunktposition einer zwischen Verteilergestänge und Rahmen angeordneten Kombination eines Feder- und eines Dämpferelementes realisierte Einstellung des Abstandes zwischen dem Verteilergestänge und dem Rahmen. Der Vorteil hierbei liegt in der passiven Dämpfung hoher Frequenzen, beispielsweise größer als 5 Hz, durch das Feder-Dämpfer-System, während niedrige Frequenzen, von beispielsweise 5 Hz oder weniger, mit einer aktiven Abstandregulation mit Hilfe der Federfußpunktverstellung gedämpft werden. Die Verwendung einer Kombination von Dämpfer und Feder mit Fußpunktverstellung ermöglicht niedrigere Anforderungen an die Regelungsgeschwindigkeit, da hohe Schwingungsfrequenzen des Verteilergestänges durch das passive Dämpfungsverhalten des Feder-Dämpfer-Systems effektiv minimiert werden.
Die Feder kann hierbei beispielsweise als Spiralfeder ausgestaltet sein und der Dämpfer als hydraulisches oder mechanisches Dämpfungselement.
In einer vorteilhaften Weiterbildung der Erfindung ist die Regelung des Abstands zwischen dem Verteilergestänge und dem Rahmen mit Hilfe von durch an dem Verteilergestänge und/oder dem Rahmen und/oder der Feldspritze und/oder der Zugmaschine angeordnete Sensoren erfasste Beschleunigungsdaten und/oder Geschwindigkeitsdaten der Feldspritze und/oder des Verteilergestänges und oder des Zugfahrzeugs vornehmbar. Hierdurch kann direkt auf Informationen, welche aus Beschleunigungs- und/oder Geschwindigkeitsdaten aufgenommen am Gestänge und/oder der Feldspritze und/oder der Zugmaschine oder deren Kombination gewonnen werden, geregelt werden.

In einer vorteilhaften Weiterbildung der Erfindung wird die Stärke und/oder Frequenz der Biegung und/oder Schwingung des Verteilergestänges mit Hilfe von Beschleunigungssensoren oder Dehnungsmessstreifen, welche an den Verteilergestängeauslegern, vorzugweise in der Nähe des äußersten Endes der Ausleger, und zumindest annähernd im Zentrum des Gestänges oder am Rahmen oder an der Feldspritze angebracht sind, bestimmt und diese Information zur Regelung des Abstands zwischen Verteilergestänge und Rahmen verwendet. Dies ermöglicht eine exakte Bestimmung der Relativbewegung und/oder - beschleunigung der Gestängeausleger relativ zum Zentrum des Gestänges.
In einer vorteilhaften Weiterbildung ist der Abstand zwischen dem Verteilergestänge und dem Rahmen mit Hilfe von durch Sensoren erfasste Geschwindigkeitsdaten der Feldspritze/eines Zugfahrzeugs und dem Vergleich dieser zu einer hinterlegten Sollgeschwindigkeit regulierbar. Dies ermöglicht zukünftige Beschleunigungsvorgänge bereits frühzeitig zu berücksichtigen.
Die Position des Verteilergestänges ist dabei in einer möglichen Ausgestaltung nur im Abstand zwischen Rahmen und Verteilergestänge variabel und ansonsten ortsfest.

In einer vorteilhaften Weiterbildung der Erfindung ist der Abstand des Verteilergestänges relativ zum Rahmen, an dem es befestigt ist, variabel und zusätzlich um eine im Wesentlichen in Fahrtrichtung liegende Achse drehbar aufgehängt. Hierdurch kann ein Ausgleich der Verteilergestängeposition an die Neigung des Geländes in vorteilhafter Weise mit der Dämpfung von Schwing- und/oder Biegebewegungen des Verteilergestänges kombiniert werden.
Eine entsprechende Lagerung des Verteilergestänges an dem Rahmen kann beispielsweise mit Hilfe von Gleit- oder Linearkugellagern oder einer pendelartigen Aufhängung des Verteilergestänges am Rahmen erreicht werden.
In einer weiteren vorteilhaften Ausgestaltung ist eine Rotation um eine im Wesentlichen senkrecht liegende Achse möglich. Hierdurch kann durch die Kombination mit geeigneten Einstellmitteln eine Dämpfung von Pendelbewegungen um ebenjene Achse bewerkstelligt und in vorteilhafter Weise mit der Dämpfung von Schwing- und/oder Biegebewegungen des Verteilergestänges erreicht werden.

Eine solche Bewegung ist beispielsweise mit Hilfe einer Kugelgelenkaufhängung zusätzlich zu der die Translationsbewegung des Verteilergestänges übertragenden Lagerung realisierbar, wobei zusätzlich zu der Rotation um eine senkrechte Achse auch eine Rotation um eine waagerechte Achse vorgesehen sein kann.

In einer vorteilhaften Weiterbildung erfolgt die Einstellung des Abstands zwischen Rahmen und Verteilergestänge mit Hilfe eine Hexapods, so dass eine Rotation des Verteilergestänges um drei senkrechte Achsen und zusätzlich eine Translationsbewegung entlang ebenjener Achsen möglich ist.
Hierdurch können die Geländeneigung ausgeglichen, sowie Pendel- und Schwingbewegungen des Verteilergestänges gedämpft werden.

Das Dämpfen oder Verhindern eines Biegens oder Aufschwingens eines Verteilergestänges einer Feldspritze wird zudem durch das Verfahren gemäß Anspruch 11 ermöglicht, indem eine zwischen Verteilergestänge und Rahmen angeordnete Bewegungsvorrichtung angesteuert wird.

Weitere vorteilhafte Ausgestaltungen ergeben sich aus den Verfahrensansprüchen 12 bis 18 und den Beschreibungen und den Figuren.
- Fig. 1: zeigt die Feldspritze mit an einem Rahmen befestigtem Verteilergestänge angehängt an ein Zugfahrzeug.
- Fig. 2: zeigt eine seitliche Ansicht des Verteilergestänges, wobei der Abstand zwischen Verteilergestänge und Rahmen mit Hilfe eines aktiven Elements gesteuert wird.
- Fig. 3: zeigt eine seitliche Ansicht des Verteilergestänges, wobei der Abstand zwischen Verteilergestänge und Rahmen mit Hilfe eines halbaktiven Elements gesteuert wird.
- Fig. 4: zeigt beispielhaft die Verbiegung des Verteilergestänges hervorgerufen durch eine Beschleunigung der Feldspritze.
- Fig. 5: zeigt beispielhaft die Beschleunigung der Feldspritze bei einem Beschleunigungsvorgang der Zugmaschine und die durch die Abstandsregelung beeinflusste Beschleunigung des Verteilergestänges sowie die Position des Verteilergestänges zu verschiedenen Zeitpunkten der Beschleunigung bzw. Regelung.
- Fig. 6: zeigt beispielhaft die Beschleunigung der Feldspritze beim Durchfahren einer Ackerfurche und die durch die Abstandsregelung beeinflusste Beschleunigung des Verteilergestänges sowie die Position des Verteilergestänges zu verschiedenen Zeitpunkten der Beschleunigung bzw. Regelung.
- Fig. 7: zeigt eine beispielhafte Kopplung des Verteilergestänges an den Rahmen mit Hilfe eines Pendelgelenkes und dreier Hydraulikzylinder

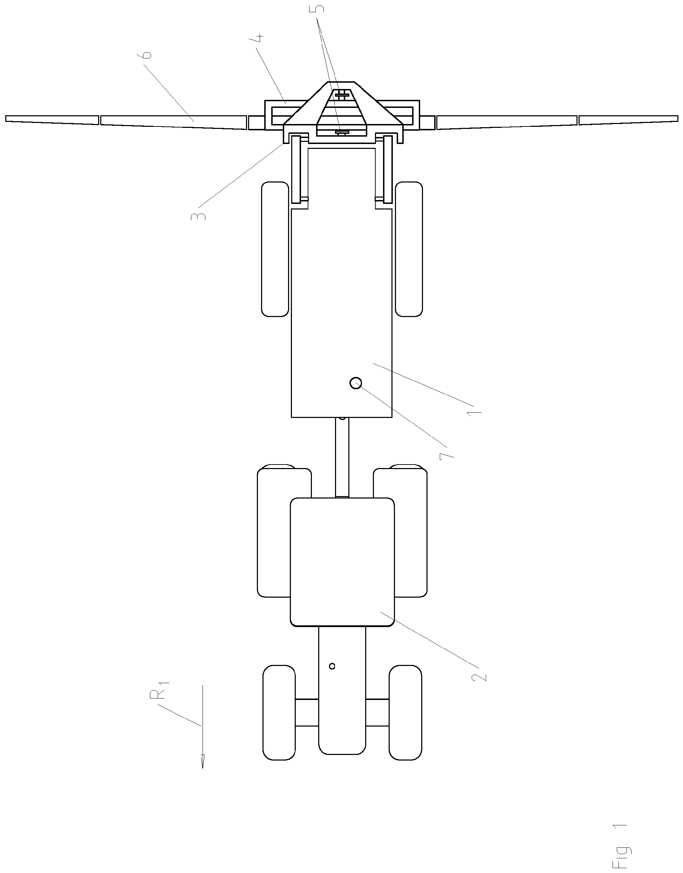

In Fig. 1 ist die Verteilmaschine (1) dargestellt als gezogene Feldspritze, welche an ein Zugfahrzeug (2) angehängt ist. An der Rückseite der Feldspritze ist ein Rahmen (3) angebracht. Dieser kann über eine Einrichtung verfügen mit deren Hilfe sich die Höhe des Rahmens (3) relativ zur Feldspritze (1) regulieren lässt. Der Rahmen (3) kann jedoch auch starr mit der Feldspritze (1) verbunden sein. Der Rahmen (3) ist mit Hilfe einer Aufhängungsvorrichtung, hier eine Pendelaufhängung, welche eine im Wesentlichen in Fahrtrichtung orientierte Bewegung ermöglicht, mit dem Mittelteil (4) verbunden, an welchem wiederum das Verteilergestänge (6) befestigt ist. Es sind jedoch auch andere eine im Wesentlichen entlang der Fahrtrichtung orientierte Bewegung übertragende Befestigungen des Mittelteils bzw. des Verteilergestänges denkbar, beispielsweise eine Achslagerung mit Hilfe eines Gleit- oder Linearkugellagers, wobei die Achse entsprechend in Fahrtrichtung orientiert ist oder eine Schienenlagerung. Der in Fig. 1 gezeigte Mittelteil ist hierbei nicht erfindungswesentlich und ist in der hier gezeigten Ausgestaltung dem Verteilergestänge zuzuordnen, da das Verteilergestänge fest mit dem Mittelteil verbunden ist und beides bewegbar gegenüber dem Rahmen mit Hilfe einer Aufhängungsvorrichtung (5), die hier als Pendelführung ausgestaltet ist, gelagert ist. Das Verteilergestänge (6) kann auch direkt über eine Lagerung mit dem Rahmen (3) verbunden sein. Auch ist es denkbar, dass der Mittelteil dem Rahmen zugeordnet ist und das Verteilergestänge über eine bewegliche Aufhängungsvorrichtung beweglich gegenüber Mittelteil und Rahmen gelagert ist. Ebenso ist denkbar, dass sich zwischen Rahmen und Verteilergestänge weitere dem Verteilergestänge oder dem Rahmen zuordenbare Teile befinden, welche entweder mit dem Rahmen oder dem Verteilergestänge beweglich verbunden sind.

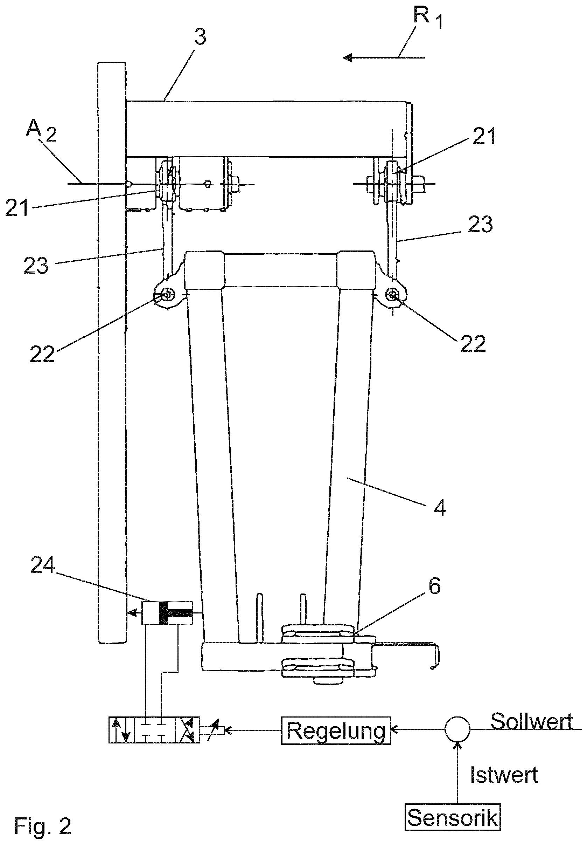

Die Pendelführung (5) des Verteilergestänges (6) erfüllt den Zweck, dieses parallel zur Fahrtrichtung R₁ und relativ zur Feldspritze (1) und dessen Rahmen (3) beweglich zu gestalten. Abhängig davon, wie die Lagerung bzw. Verbindung zwischen Verteilergestänge (6) und Rahmen (3) ausgestaltet ist, kann die mögliche Relativbewegung von Verteilergestänge (6) und Rahmen (3) weitere Freiheitsgrade aufweisen. Ist die Lagerung beispielsweise als Gleitlager oder Linearkugellager entlang einer in Fahrtrichtung liegenden Achse ausgebildet, so kann das Verteilergestänge (6) um das Zentrum dieser Achse in Richtung R₁ zusätzlich gedreht werden. Gleiches gilt für die in Fig. 1 und Fig. 2 gezeigte Ausgestaltung, bei der die eine Seite des Pendelgelenks als Kugelkopflager ausgebildet ist. Bei einer Schienenführung wäre diese Bewegung dagegen unterbunden. Ebenso gilt dies für eine andere Ausgestaltung bei der nicht eine sondern zwei oder mehr Achsen zur Führung dienen. Auch hierbei wäre die Drehbewegung des Verteilergestänges (6) um eine Achse parallel zu R₁ unterbunden und zwar unabhängig von der Lagerung auf den Achsen.

Das Einstellen der Position des Verteilergestänges (6) in der Fahrtrichtung R₁ und ebenso die Antwort auf auftretende oder zu erwartende Beschleunigungen erfolgt über eine in Fig. 1 nicht dargestellte Bewegungsvorrichtung, welche vorzugsweise als aktive und/oder halbaktive Aktoren und/oder Dämpfungselemente ausgestaltet ist. Diese werden auf der Basis von Daten, welche von einem oder mehreren Messeinrichtungen (7) aufgenommen werden, angesteuert. Vorzugsweise handelt es sich hierbei um einen Beschleunigungssensor, aber auch andere Sensoren sind denkbar, wie beispielsweise Dehnungsmessstreifen oder ein Geschwindigkeitssensor, der für den Vergleich der momentanen mit einer Sollgeschwindigkeit dient, so dass zukünftige Beschleunigungsvorgänge frühzeitig für die Regelung berücksichtigt und die Aktoren und/oder Dämpfer entsprechend der zu erwartenden Beschleunigung vorkonfiguriert werden können. Auch ist es denkbar, dass neben einem oder mehreren Sensoren auf der Feldspritze auch Sensoren auf dem Gestänge und/oder dem Zugfahrzeug für die Steuerung der Verteilergestängeposition ausgelesen werden. Für die Steuerung der Position des Verteilergestänges ist auf dem Arbeitsrechner des Zugfahrzeugs und/oder der Feldspritze ein geeignetes Programm dauerhaft oder temporär gespeichert. Dieses übernimmt die Regelung der Verteilergestängeposition auf Basis der Daten, welche von den zuvor beschriebenen Sensoren gemessen werden.

In Fig. 2 dargestellt ist eine seitliche Ansicht des Mittelteils (4) und des Rahmens (3). Der Mittelteil (4) ist hierbei mittels einer pendelnden Parallelogrammaufhängung mit zwei oberen Kugelkopfgelenken (21) und zwei unteren Gelenken (22) und den beiden die oberen und unteren Gelenke verbindenden Pendelstangen (23) mit dem Rahmen (3) verbunden. Somit ist der Mittelteil, an dem das Verteilergestänge (6) befestigt ist, in Richtung R₁ beweglich ausgebildet und durch die Kugelgelenke auch um die Achse A₂ schwenkbar. Auch ist es denkbar, dass die Lagerung nur über ein oder mehr als zwei Lager erfolgt. Die Bewegung um die Achse A₂ ist hierbei nicht erfindungswesentlich und kann beispielsweise durch entsprechende mehrachsige Lagerung oder Schienenführung unterbunden werden. In der hier gezeigten Ausgestaltung ist die Steuerung der Aufhängungsvorrichtung als aktives Element (24) vorgesehen. Von dem hier nicht dargestellten Sensor erfasste Daten, beispielsweise die Beschleunigung, werden als Istwerte mit einem Sollwert, beispielsweise per Differenzbildung, verglichen. Der hierdurch gewonnene Vergleichswert wird in einem Regelkreis verwendet um ein Stellsignal zu generieren, welches zur Steuerung des aktiven Elementes dient und damit zur Regelung der Position des Mittelteils (4) und damit mittelbar des hier nicht dargestellten am Mittelteil befestigten Verteilergestänges verwendet, wobei die Regelung instantan oder quasi-instantan erfolgt. Das aktive Element antwortet also quasi ohne Zeitverzögerung oder mit minimaler Zeitverzögerung auf von der Messeinrichtung ermittelte Daten und verhindert oder dämpft so das hier nicht dargestellte elastische Verbiegen oder Schwingen der Enden des Verteilergestänges. Das aktive Element (24) ist hier als Hydraulikzylinder dargestellt. Es sind jedoch auch beliebige andere Formen der Aktorik denkbar, beispielsweise mit einem Pneumatikzylinder, einem fluidischen Muskel, einem Elektromotor oder Hydraulikmotor.

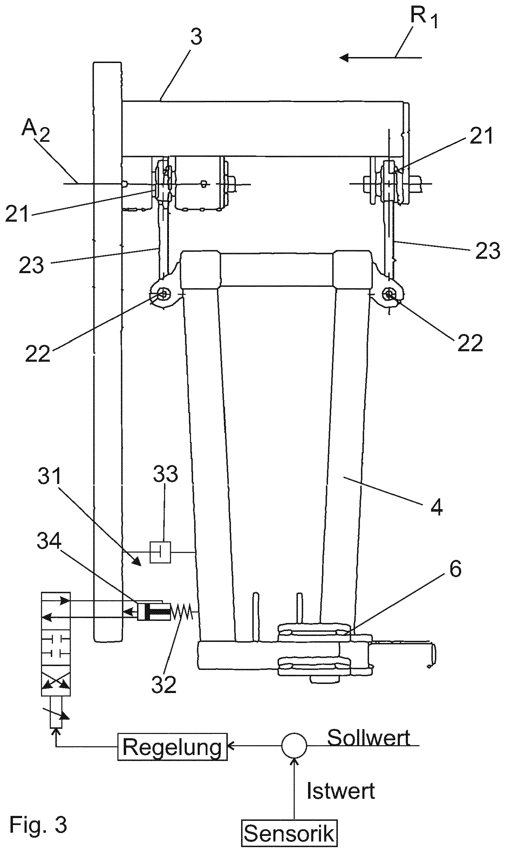

Eine andere Ausgestaltung ist in Fig. 3 dargestellt. Auch hier ist der Mittelteil (4) zu erkennen, welcher über die oberen Kugelkopfgelenke (21), die unteren Gelenke (22) und die sie verbindenden Pendelstangen (23) am Rahmen (3) befestigt ist. Der Unterschied zu der in Fig. 2 gezeigten Ausgestaltung ist, dass hier das aktive Element durch ein langsam aktives Element (31) ersetzt wurde. Es besteht aus einem Federelement (32), beispielsweise einer Spiralfeder, Blattfeder oder einem hydraulischen Federelement, und einem Dämpfer (33), der beispielsweise als hydraulischer oder mechanischer Stoßdämpfer ausgestaltet sein kann, welche zwischen dem Rahmen (3) und dem Mittelteil (4) angebracht sind und eine klassische passive Dämpfung von Bewegungen des Verteilergestänges (6) relativ zum Rahmen (3) bewirken, wobei beispielsweise auch die Möglichkeit vorgesehen sein kann, die Dämpfungswirkung des Dämpfers regelbar zu gestalten. Zusätzlich besteht die Möglichkeit die Vorspannung der Feder (32) über einen Aktor (34), der in diesem Fall beispielhaft als doppelwirkender Zylinder ausgestaltet ist, eine Veränderung der Federfußpunktposition vorzunehmen. Dies bewirkt eine Vorspannung der Feder (32), was zu einer Kraft auf das Mittelteil (4) und somit einer Veränderung der Position des Verteilergestänges (6) relativ zum Rahmen (3) führt. Auch hier werden von dem nicht dargestellten Sensor erfasste Daten, beispielsweise die Beschleunigung, als Istwert mit einem Sollwert, beispielsweise per Differenzbildung, verglichen. Der hierdurch gewonnene Vergleichswert wird in einem Regelkreis verwendet um ein Stellsignal zu generieren, welches zur Steuerung des aktiven Elementes, hier der Federfußpunktposition durch den doppelwirkenden Zylinder, dient und damit zur Regelung der Position des Mittelteils (4) und damit mittelbar des hier nicht dargestellten Verteilergestänges.

Dieser Aufbau hat gegenüber der in Fig. 2 gezeigten Ausgestaltung den Vorteil niedrigerer Anforderungen an die Regelungsgeschwindigkeit des Dämpfungssystems, da hohe Frequenzen durch die passive Dämpfung minimiert werden. Durch die Kombination eines passiven Feder-Dämpfer-Systems aus Feder (32) und Dämpfer (33) sowie eines Aktors (34) zur aktiven Federfußpunktverstell-ung, kann bevorzugt auftretenden Schwingungen des Verteilergestänges (6) mit niedriger Frequenz, beispielsweise unterhalb von 5 Hz, über die Verstellung des Federfußpunktes aktiv entgegengewirkt werden, während für Schwingungen mit hoher Frequenz, von beispielsweise 5 Hz oder mehr, die passive Dämpfung eine Minimierung der Auswirkungen von Beschleunigungsvorgängen auf das Verteilergestänge (6) erreicht. Die Position des Federfußpunktes wird hierbei, wie zuvor bereits beschrieben durch ein auf dem Arbeitsrechner der Feldspritze und/oder des Zugfahrzeugs gespeichertes Programm gesteuert.

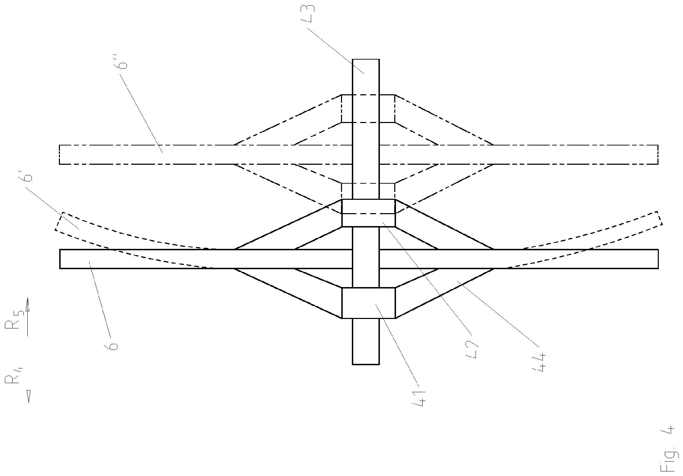

In Fig. 4 ist beispielhaft die Auslenkung der Seiten des Verteilergestänges (6) durch eine in Fahrtrichtung R₄ einsetzende Beschleunigung dargestellt. Der Einfachheit halber ist das Verteilergestänge (6) in dieser Prinzipskizze durch zwei Gleitlager (41) und (42) auf einer Achse entlang der Bewegungsrichtung R₄ beweglich gelagert. Die beschriebenen Bewegungsabläufe und Biegungen können für eine entsprechend anders ausgestaltete Lagerung, wie beispielsweise die pendelnde Aufhängung in Fig. 2 und Fig. 3 entsprechend beobachtet werden. Eine auftretende Beschleunigung kann beispielsweise durch das Anfahren des Zugfahrzeugs aus der Ruheposition hervorgerufen werden. Gezeigt ist das Verteilergestänge (6), welches über die Aufhängungsvorrichtung (44) mit dem vorderen Lager (41) und dem hinteren Lager (42) verbunden ist. Das vordere Lager (41) sowie das hintere Lager (42) sind wiederum auf der Achse (43), derart angeordnet, dass das Verteilergestänge (6) in und entgegen der Fahrtrichtung R₄ relativ zur Achse (43) verschiebbar ist.

Eine einsetzende Beschleunigung, hier beispielhaft in Richtung R₄, beispielsweise durch einen Anfahrvorgang des Zugfahrzeugs, führt wegen der Flexibilität des Verteilergestänges (6) in Verbindung mit seinen Dimensionen und der Massenträgheit, zu einer zunehmend verzögerten Beschleunigung hin zu den Außenseiten des Verteilergestänges, was zu einer elastischen Verbiegung entsprechend der Lage von Verteilergestänge (6') und einem eventuell dadurch induzierten Aufschwingen des Verteilergestänges führt. Dieser Effekt kann verhindert oder vermindert werden, indem das Gestänge entsprechend der Lage von Verteilergestänge (6") in Abhängigkeit der Stärke der auftretenden Beschleunigung in Richtung R₅ bewegt und somit der auftretenden Verbiegung begegnet wird.

Bei anhaltenden Beschleunigungsvorgängen, beispielsweise beim Anfahren oder bei einer Erhöhung der Geschwindigkeit des Zugfahrzeugs, bewirkt dieser Mechanismus eine Dämpfung der auftretenden Verbiegung und evtl. hierdurch angeregter Schwingungen. Da das Verteilergestänge (6) letztlich unumgänglich auf die Geschwindigkeit des Zugfahrzeugs beschleunigt werden muss, können die Auswirkungen einer monotonen Beschleunigung auf die Lage und/oder Form des Verteilergestänges nur gedämpft, nicht aber gänzlich verhindert werden.

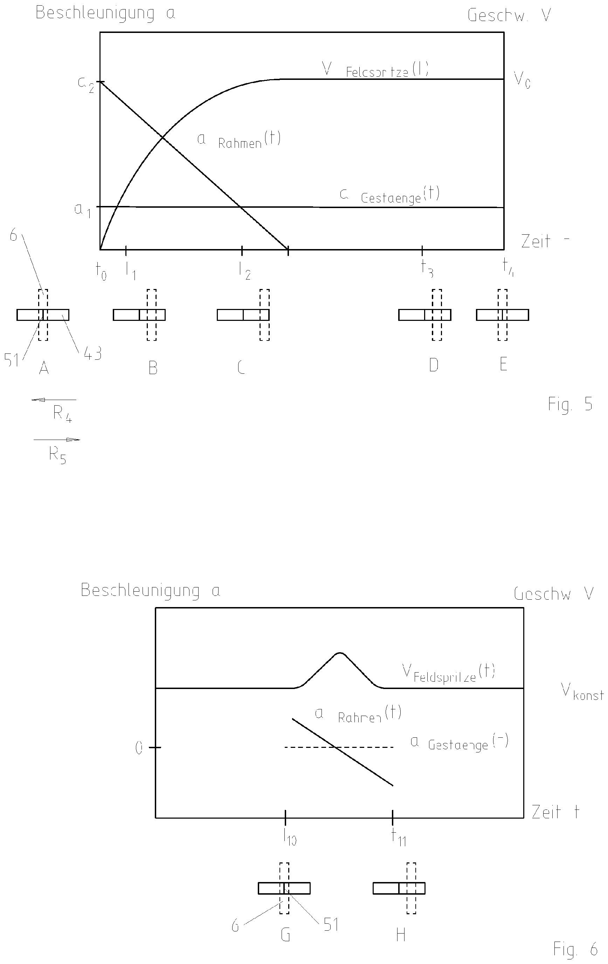

Fig. 5 zeigt die Geschwindigkeit der Feldspritze v_{Feldspritze}(t) in Abhängigkeit der Zeit t beim Anfahren aus der Ruhelage, wobei der genaue Ablauf des Beschleunigungsvorgangs nicht erfindungswesentlich ist. Ebenso gelten die vorgestellten Prozesse und Abläufe für Bremsvorgänge oder Beschleunigungen aus einer Bewegung heraus. Der hier gezeigte Beschleunigungsverlauf a_{Rahmen}(t) gilt für die Feldspritze, den Rahmen und auch für ein relativ zum Rahmen ortsfestes Verteilergestänge und erfolgt zum Zeitpunkt t₀ mit maximaler Beschleunigung a₁, welche bei einem typischen Beschleunigungsvorgang dann abnimmt je mehr sich die Geschwindigkeit v_{Feldspritze}(t) der Zielgeschwindigkeit v₀ annähert. Sobald diese erreicht ist, beträgt die Beschleunigung 0 m/s², die Geschwindigkeit der Feldspritze ist dann konstant. Die Biegung der Seiten eines starr mit dem Rahmen verbundenen Verteilergestänges hängt hierbei direkt von der auftretenden Beschleunigung ab. Je größer die Beschleunigung, je größer ist die Biegung des Verteilergestänges.

Um die auf das Verteilergestänge (6) wirkende Beschleunigung a_{Rahmen}(t) zu verringern, kann nun, wie in Fig. 4 gezeigt, das Verteilergestänge (6) auf der Achse (43) relativ zur Feldspritze nach hinten bewegt werden. Hierfür muss das Verteilergestänge (6) auf der Achse (43) in Richtung R₅ beschleunigt werden. Durch vektorielle Addition der entgegengesetzten Beschleunigungsbeiträge, also Fahrzeugbeschleunigung in Richtung R₄ und der Beschleunigung des Verteilergestänges relativ zu Rahmen (3) und Feldspritze (1) in Richtung R₅, ergibt sich so eine verringerte Beschleunigungswirkung a_{Gestaenge}(t) auf das bewegbare Verteilergestänge (6) und damit eine geringere Biegung der Seiten des Verteilergestänges während des Beschleunigungsvorgangs des Zugfahrzeugs (2). Dies führt jedoch dazu, dass die Geschwindigkeit des Verteilergestänges (6) relativ zum Untergrund geringer als die der Feldspritze (1) ist.
Um das Verteilergestänge (6) während der gesamten Beschleunigungsphase mit zumindest annähernd gleicher Beschleunigung a_{Gestänge}(t) zu versehen und letztlich auf die Geschwindigkeit der Feldspritze zu beschleunigen, ist es zweckmäßig das Verteilergestänge zum Schluss dieses Prozesses relativ zur Achse nach vorne in die Ausgangsposition zu bewegen. Der Vorteil dieses Verfahrens ist, dass das Verteilergestänge (6) einer geringeren Beschleunigungswirkung ausgesetzt ist, die entsprechend über einen, im Vergleich zum Beschleunigungsvorgang des Zugfahrzeugs (2), längeren Zeitraum wirkt. Somit ist die maximale Verbiegung der Seiten des Verteilergestänges (6) aus der Ruhelage geringer.

Die Position des Verteilergestänges (6) relativ zu der Achse (43) während des Beschleunigungsprozesses ist ebenfalls in Fig. 5 dargestellt. Vor Beginn des Beschleunigungsvorgangs ist das Verteilergestänge (6), symbolisiert durch die gestrichelte Linie beispielsweise in der Mittelstellung (51) auf der Achse (43) (Zustand A). Diese Position ist vorteilhaft, um Beschleunigungsvorgänge in Richtung R₄ und R₅ möglichst gut abmildern zu können, aber auch jede andere Position auf der Achse (4) zwischen den Endpunkten der Achse ist als Ausgangsposition denkbar, wenn auch für den dargestellten Fall nicht in gleichem Maße für die Dämpfung auftretender Beschleunigungen geeignet. Bei einer auftretenden Beschleunigung in Richtung R₄ sorgt die erfindungsgemäße Sensor-Aktor-Kombination dafür, dass die auf das Verteilergestänge (6) wirkende Beschleunigung durch ein Bewegen des Verteilergestänges (6) auf der Achse (43) in der R₄ entgegengesetzten Richtung R₅ reduziert wird. Die hier dargestellte erfindungsgemäße Ausgestaltung ermöglicht insbesondere, die auf das Verteilergestänge wirkende Beschleunigung a_{Gestaenge}(t) auf einen im Vergleich zur Beschleunigung der Zugmaschine a_{Rahmen}(t) niedrigeren und konstanten Wert a_{Gestaenge}(t) =a₁ zu reduzieren, der über einen längeren Zeitraum (t₄-t₀) auf das Verteilergestänge (6) wirkt. Für einen Zeitpunkt früher als t₂, beispielsweise t₁ wird dafür das Verteilergestänge (6) auf der Achse (43) nach hinten entgegen der Richtung R₄ bewegt (B). Zu dem Zeitpunkt t₂ an dem die Beschleunigungen von Rahmen und Regelung gleich sind, ist die Position des Verteilergestänges (6) auf der Achse (43) in seiner extremalen Position (C), bevor es für Zeitpunkte größer als t₂, beispielsweise t₃ auf der Achse (43) in Richtung Mittelposition (51) nach vorn bewegt wird (D), welche dann zum Zeitpunkt t₄ erreicht wird. Danach wirkt auf das Verteilergestänge keine Beschleunigung mehr. In anderen Ausgestaltungen sind auch andere als der oben beschriebene Regelungsvorgang möglich, beispielsweise mit sukzessiv abnehmender oder zunehmender auf das Verteilergestänge (6) wirkender Beschleunigung, die auch über einen längeren oder kürzeren Zeitraum wirken kann als die Beschleunigung des Zugfahrzeugs (2) und im Betrag schwächer oder stärker ausfallen kann als diese.

Demgegenüber sind kurzeitige Beschleunigungs- und/oder Bremsvorgänge eventuell auch wie im dargestellten Fall in Kombination und dadurch hervorgerufene Biegungen und/oder Schwingungen des Verteilergestänges (6), die beispielsweise durch ein Durchfahren eines Schlagloches verursacht werden zeitlich stark eingegrenzte Prozesse. Die Geschwindigkeit des Zugfahrzeugs (2) und/oder der Feldspritze (1) wird sich beim Durchfahren des Schlaglochs kurzeitig ändern und dann vorzugsweise wieder den Ausgangswert einnehmen, der vor dem Durchfahren der Furche vorlag. Die durch die Geschwindigkeitsänderung und/oder Lageänderung der Feldspritze beim Durchfahren der Furche eintretende Beschleunigung des Verteilergestänges (6) lässt sich bei diesen Vorgängen annähernd verhindern unter der Annahme, dass die Regelung instantan oder quasiinstantan auf die Bewegung der Feldspritze reagiert, zumindest jedoch erheblich abmildern.

Fig. 6 zeigt beispielhaft den Geschwindigkeitsverlauf v_{Feldspritze}(t) der Feldspritze beim Durchfahren eines Schlagloches. Beim Hineinfahren in das Schlagloch wird sich die Geschwindigkeit der Feldspritze auf Grund der wirkenden Beschleunigung durch die Schwerkraft kurzzeitig erhöhen und dann wegen der beim Herausfahren wirkenden Bremswirkung der Schwerkraft ungefähr auf den ursprünglichen Wert vₖₒₙₛₜ wieder verringern. Darüber hinaus zeigt die Fig. 6 den Verlauf der Beschleunigung auf den Rahmen a_{Rahmen}(t), der beim Hineinfahren eine positive und beim Herausfahren aus dem Schlagloch eine negative Beschleunigung also Bremswirkung zeigt und die durch die Regelung beeinflusste Beschleunigung des Verteilergestänges (6) a_{Gestaenge}(t), welche durch das Wirken der Sensor-Aktor-Regelung auf 0 m/s² reduziert werden kann. Dies wird erreicht indem das Verteilergestänge (6), welches sich zum Zeitpunkt t₁₀, vor dem Hineinfahren in die Furche, in der Mittelstellung befindet (G), während des Durchfahrens nach hinten entgegen der Fahrtrichtung R₄ bewegt wird und so die wirkende Beschleunigung a_{Rahmen}(t) kompensiert wird. Dies führt dazu, dass das Verteilergestänge nach dem Herausfahren aus der Furche, beispielsweise zum Zeitpunkt t₁₁, sich nicht in der Mittelstellung (51) befindet, da die mittlere Geschwindigkeit sich durch das Fahren durch das Schlagloch leicht erhöht hat (H). Das Verteilergestänge (6) kann nun beispielsweise langsam wieder in die Mittelstellung (51) bewegt werden, was nicht zu einer spürbaren Verbiegung der Enden des Verteilergestänges (6) führen wird. In gleicher Weise können Biegungen und /oder Schwingungen des Verteilergestänges (6) beim Überfahren von Erhebungen oder beim Abbremsen vermindert oder verhindert werden.

Für die in Fig. 5 und Fig. 6 vorgestellten Regelungsprozesse wurde ein etwaiges Aufschwingen des Verteilergestänges außer Acht gelassen und angenommen, dass auftretende Schwingungen stark gedämpft werden. Schwingungen können erfindungsgemäß durch die Berücksichtigung von Beschleunigungs- und/oder Geschwindigkeitsdaten und oder Lagedaten und/oder anderer Parameter des Zugfahrzeugs und/oder der Feldspritze und/oder des Verteilergestänges und/oder insbesondere der Ausleger des Verteilergestänges in den Regelungsprozess integriert werden, um nicht nur die Biegung, sondern auch ein Schwingen und/oder Aufschwingen des Verteilergestänges zu verhindern. Hierbei kommt insbesondere eine Regelung auf Basis von Beschleunigungsdaten der Gestängeausleger und des Gestängezentrums, welche miteinander verglichen werden, in Betracht, da dies bei Schwingungen und Biegungen des Gestänges Auskunft über die Relativbewegung zwischen Gestängeauslegern und -zentrum gibt. Die Sensoren an den Auslegern werden hierbei in vorteilhafter Weise unter Berücksichtigung der konstruktiven Aufbaus des Gestänges sowie der Form der zu erwartenden Schwingungsmoden des Gestänges so weit entfernt wie möglich vom Gestängezentrum angebracht.

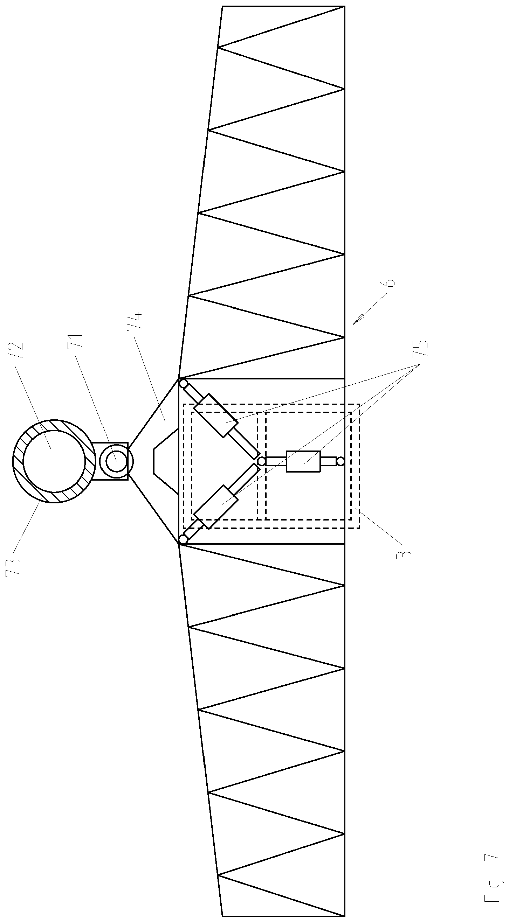

Eine erfindungsgemäße Ausgestaltung, welche neben der Verschiebung des Verteilergestänges (6) relativ zum Rahmen (3) auch eine Pendelbewegung um den Aufhängepunkt eines Kugelgelenks (71) zulässt ist in Fig. 7 dargestellt. Von der Verteilergestängerückseite her betrachtet ist die lagerführende Achse (72) mit dem Lager (73) und dem an der Aufhängungsvorrichtung (74) befestigten Verteilergestänge (6) abgebildet. Die Pendelbewegung wird durch das zwischen der Aufhängungsvorrichtung (74) und dem Lager (73) montierte Kugelgelenk (71) ermöglicht. Aktoren (75), die hier beispielhaft als doppelwirkende Hydraulikzylinder ausgebildet und zwischen Rahmen (3) und dem Verteilergestänge (6) angebracht sind, definieren eine eindeutige Position des Verteilergestänges (6) relativ zum Rahmen (3). Durch Auslenkung der Aktoren (75) ist es möglich den Abstand des Verteilergestänges (6) zum Rahmen (3) und zusätzlich die Rotation des Verteilergestänges (6) um alle drei Raumrichtungen zu kontrollieren, wobei der Drehpunkt durch das Kugelgelenk (71) definiert wird. Diese hier für eine aktive Dämpfung vorgesehene Ausgestaltung kann in entsprechender Weise auch mit einem halbaktiven Feder-Dämpfer-Aufbau realisiert werden.

Weitere mögliche Ausgestaltungen, die die Kombination von Translations und Rotationsbewegungen, beispielsweise durch die Verwendung eines Hexapods, ermöglichen, sind denkbar.

## Patentansprüche

1. Verteilergestänge (6) einer landwirtschaftlichen Feldspritze (1), welches eine Ausdehnung senkrecht zur Fahrtrichtung aufweist und mittels einer eine Bewegung des gesamten Verteilergestänges (6) zumindest annähernd in Fahrtrichtung ermöglichende Aufhängungsvorrichtung (5) beweglich gegenüber dem Rahmen (3), an dem es befestigt ist, gelagert ist, wobei eine Bewegungsvorrichtung zur Dämpfung und/oder Verhinderung von zumindest annähernd in Fahrtrichtung auftretenden elastischen Gestängebiegungen zwischen dem Rahmen und dem Verteilergestänge angeordnet ist
**dadurch gekennzeichnet,**
**dass** ein oder mehrere zwischen dem Rahmen (3) und dem Verteilergestänge (6) angeordnete Aktoren vorgesehen sind, die die Dämpfung und/oder Verhinderung der elastischen Verbiegung des Verteilergestänges (6), hervorgerufen durch die Dynamik der Feldspritze, mittels einer Abstandsänderung zwischen Verteilergestänge (6) und Rahmen (3) bewirken.

2. Verteilergestänge nach Anspruch 1, **dadurch gekennzeichnet, dass** eine zwischen Verteilergestänge (6) und Rahmen (3) angeordnete Kombination eines Feder- (32) und eines Dämpferelementes (34) vorgesehen ist, die die Dämpfung und/oder Verhinderung der elastischen Verbiegung des Verteilergestänges (6) durch die mittels Regulation der Federfußpunktposition realisierte Einstellung des Abstandes zwischen dem Verteilergestänge und dem Rahmen (3) bewirkt.

3. Verteilergestänge nach zumindest einem der Ansprüche 1 oder 2, **dadurch gekennzeichnet, dass** an dem Verteilergestänge und/oder dem Rahmen und/oder der Feldspritze (1) und/oder dem Zugfahrzeug (2) angeordnete Sensoren (7) vorgesehen sind, so dass die Regelung des Abstands zwischen dem Verteilergestänge (6) und dem Rahmen (3) mit Hilfe von mittels der Sensoren erfassten Beschleunigungsdaten und/oder Geschwindigkeitsdaten der Feldspritze (1) und/oder des Verteilergestänges (6) und/oder des Zugfahrzeugs (2) vornehmbar ist.

4. Verteilergestänge nach zumindest einem der Ansprüche 1 bis 3, **dadurch gekennzeichnet, dass** Beschleunigungssensoren oder Dehnungsmessstreifen, welche an den Verteilergestängeauslegern, vorzugweise in der Nähe des äußersten Endes der Ausleger, und zumindest annähernd im Zentrum des Gestänges oder am Rahmen oder an der Feldspritze angebracht sind, welche die Stärke und/oder Frequenz der Biegung und/oder Schwingung des Verteilergestänges (6) bestimmen und diese Information zur Regelung des Abstands zwischen Verteilergestänge (6) und Rahmen (3) verwendbar ist.

5. *Verteilergestänge nach zumindest einem der Ansprüche 3 oder 4, **dadurch gekennzeichnet, dass** an der Feldspritze (1) oder dem Zugfahrzeug (2) Sensoren zur Erfassung von Geschwindigkeitsdaten der Feldspritze*/*eines Zugfahrzeugs angeordnet sind und der Abstand zwischen dem Verteilergestänge (6) und dem Rahmen (3) mit Hilfe dieser Daten und dem Vergleich dieser zu einer hinterlegten Sollgeschwindigkeit regulierbar ist.*

6. Verteilergestänge nach zumindest einem der vorangegangenen Ansprüche, **dadurch gekennzeichnet, dass** das Verteilergestänge derart ausgebildet ist, dass die Verschiebung des Verteilergestänges (6) relativ zum Rahmen (3) der einzige Freiheitsgrad des Verteilergestänges (6) ist.

7. Verteilergestänge nach zumindest einem der Ansprüche 1 - 5, **dadurch gekennzeichnet, dass** das Verteilergestänge (6) entlang einer in Fahrtrichtung liegenden Achse verschiebbar angeordnet ist und zusätzlich um diese Achse drehbar gelagert ist.

8. *Verteilergestänge nach zumindest einem der Ansprüche 1 - 5 **dadurch gekennzeichnet, dass** das Verteilergestänge derart ausgebildet ist, dass neben dem Abstand des Verteilergestänges (6) zum Rahmen (3) zusätzlich die Rotation des Verteilergestänges um eine in Fahrtrichtung liegende Achse und eine zu dieser senkrecht liegenden Achse möglich ist.*

9. Verteilergestänge nach Anspruch 9, **dadurch gekennzeichnet, dass** eine Pendelaufhängung (71) und drei doppelt wirkende Zylinder (75) vorgesehen sind, die die Translations- und Rotationsbewegung übertragen.

10. Verteilergestänge nach zumindest einem der vorangegangenen Ansprüche, **dadurch gekennzeichnet, dass** die Aufhängungsvorrichtung zugleich die Bewegungsvorrichtung darstellt, insbesondere in einer Anordnung aus sechs Hydraulikzylindern, welche als Hexapod drei Translations- und drei Rotationsfreiheitsgrade ermöglicht.

11. Verfahren zur Bewegungssteuerung eines Verteilergestänges (6) einer landwirtschaftlichen Feldspritze (1), welches eine Ausdehnung senkrecht zur Fahrtrichtung aufweist und mittels einer eine Bewegung des gesamten Verteilergestänges (6) zumindest annähernd in Fahrtrichtung ermöglichende Aufhängungsvorrichtung (5) beweglich gegenüber dem Rahmen (3), an dem es befestigt ist, gelagert ist, wobei eine Dämpfung und/ oder Verhinderung von zumindest annähernd in Fahrtrichtung auftretenden elastischen Gestängebiegungen mittels Steuerung einer zwischen Rahmen und Verteilergestänge (6) angeordneten Bewegungsvorrichtung ermöglicht wird, **dadurch gekennzeichnet, dass** die Dämpfung und/oder Verhinderung der elastischen Verbiegung des Verteilergestänges (6), hervorgerufen durch die Dynamik der Feldspritze (1), mit Hilfe einer Abstandsänderung zwischen dem Rahmen (3) und dem Verteilergestänge (6) erfolgt.

12. Verfahren nach Anspruch 11, **dadurch gekennzeichnet, dass** die Dämpfung und/oder Verhinderung der elastischen Verbiegung des Verteilergestänges (6) durch die mittels Regulation der Federfußpunktposition einer zwischen Verteilergestänge (6) und Rahmen (3) angeordneten Kombination eines Feder-(32) und eines Dämpferelementes (34) realisierte Einstellung des Abstandes zwischen dem Verteilergestänge (6) und dem Rahmen (3) erreicht wird.

13. Verfahren nach zumindest einem der Ansprüche 11 oder 12, **dadurch gekennzeichnet, dass** der Abstand zwischen dem Verteilergestänge (6) und dem Rahmen (3) mit Hilfe von Beschleunigungsdaten und/oder Geschwindigkeitsdaten der Feldspritze (1) und/oder des Verteilergestänges (6) und/ oder des Zugfahrzeugs (2) eingestellt wird.

14. Verfahren nach zumindest einem der Ansprüche 11 bis 13, **dadurch gekennzeichnet, dass** die Stärke und/oder Frequenz der Biegung und/oder Schwingung des Verteilergestänges (6) mit Hilfe von Beschleunigungsdaten, aufgenommen an den Verteilergestängeauslegern, vorzugweise in der Nähe des äußersten Endes der Ausleger, und zumindest annähernd im Zentrum des Gestänges oder am Rahmen oder an der Feldspritze (1), bestimmt wird und diese Information zur Regelung des Abstands zwischen Verteilergestänge (6) und Rahmen (3) verwendbar ist.

15. Verfahren nach zumindest einem der Ansprüche 13 oder 14, **dadurch gekennzeichnet, dass** der Abstand zwischen dem Verteilergestänge (6) und dem Rahmen (3) mit Hilfe von Geschwindigkeitsdaten der Feldspritze (1) und/oder eines Zugfahrzeugs (2) und dem Vergleich dieser zu einer hinterlegten Sollgeschwindigkeit reguliert wird.

16. Verfahren nach zumindest einem der Ansprüche 11 bis 15, **dadurch gekennzeichnet, dass** die Verschiebung des Verteilergestänges (6) relativ zum Rahmen (3) der einzige Freiheitsgrad des Verteilergestänges (6) ist.

17. Verfahren nach zumindest einem der Ansprüche 11 bis 15, **dadurch gekennzeichnet, dass** das Verteilergestänge (6) entlang einer in Fahrtrichtung liegenden Achse verschiebbar angeordnet ist und zusätzlich um diese Achse drehbar gelagert ist.

18. Verfahren nach zumindest einem der Ansprüche 11 - 15 **dadurch gekennzeichnet, dass** neben dem Abstand des Verteilergestänges (6) zum Rahmen (3) zusätzlich die Rotation des Verteilergestänges (6) um eine in Fahrtrichtung liegende Achse und eine zu dieser senkrecht liegenden Achse möglich ist.

## Claims

1. Distributor rod system (6) of an agricultural field spray (1), which distributor rod system has an extent perpendicularly to the direction of travel and is mounted, by means of a suspension device (5) which permits movement of the entire distributor rod system (6) is approximately in the direction of travel, so as to be movable with respect to the frame (3) to which it is attached, wherein a movement device for damping and/or preventing elastic rod system bending, occurring at least approximately in the direction of travel is arranged between the frame and the distributor rod system,
**characterized**
**in that** one or more actuators which are arranged between the frame (3) and the distributor rod system (6) are provided, said actuators bringing about damping and/or preventing the elastic bending of the distributor rod system (6), caused by the dynamics of the field spray, by changing the distance between the distributor rod system (6) and the frame (3).

2. Distribution rod system according to Claim 1,
**characterized in that** a combination of a spring element (32) and a damper element (34) is provided between the distribution rod system (6) and the frame (3), which combination brings about the damping and/or changing of the elastic bending of the distribution rod system (6) by means of the adjustment of the distance between the distribution rod system and the frame (3) which is carried out by regulating the spring base point position.

3. Distribution rod system according to at least one of Claims 1 and 2, **characterized in that** sensors (7) are provided on the distribution rod system and/or the frame and/or the field spray (1) and/or the traction vehicle (2), with the result that the regulation of the distance between the distribution rod system (6) and the frame (3) can be performed using acceleration data and/or speed data, acquired by means of the sensors, of the field spray (1) and/or of the distribution rod system (6) and/or of the traction vehicle (2).

4. Distribution rod system according to at least one of Claims 1 to 3, **characterized in that** acceleration sensors or strain gauges which are attached to the distribution rod system booms, preferably in the vicinity of the outermost end of the booms, and are at least approximately in the centre of the rod system or on the frame or on the field spray which determine the strength and/or frequency of the bending and/or vibration of the distribution rod system (6), and this information can be used to regulate the distance between the distribution rod system (6) and the frame (3).

5. *Distribution rod system according to at least one of Claims 3 and 4, **characterized in that** sensors for acquiring speed data of the field spray*/*of a traction vehicle are arranged on the field spray (1) or the traction vehicle (2), and the distance between the distribution rod system (6) and the frame (3) can be regulated using this data and the comparison of the latter with a stored setpoint speed.*

6. Distribution rod system according to at least one of the preceding claims, **characterized in that** the distribution rod system is embodied in such a way that the shifting of the distribution rod system (6) relative to the frame (3) is the only degree of freedom of the distribution rod system (6).

7. Distribution rod system according to at least one of Claims 1-5, **characterized in that** the distribution rod system (6) is arranged so as to be shiftable along an axis lying in the direction of travel, and is mounted so as to be additionally rotatable about this axis.

8. *Distribution rod system according to at least one of Claims 1-5,* ***characterized in* that** *the distribution rod system is embodied in such a way that in addition* to *the distance of the distribution rod system (6) from the frame (3), the distribution rod system can additionally rotate about an axis lying in the direction of travel and an axis lying perpendicularly with respect thereto.*

9. Distribution rod system according to Claim 9, **characterized in that** a pendulum suspension system (71) and three double-acting cylinders (75) are provided which transmit the translational movement and rotational movement.

10. Distribution rod system according to at least one of the preceding claims, **characterized in that** the suspension device at the same time constitutes the movement device, in particular in an arrangement composed of six hydraulic cylinders, which arrangement permits, as a hexapod, three translational degrees of freedom and three rotational degrees of freedom.

11. Method for controlling the movement of a distribution rod system (6) of an agricultural field spray (1), which distribution rod system has an extent perpendicular with respect to the direction of travel and is mounted, by means of a suspension device (5) which permits movement of the entire distribution rod system (6) at least approximately in the direction of travel, so as to be movable with respect to the frame (3) to which it is attached, wherein damping and/or preventing of elastic rod system bending occurring at least approximately in the direction of travel are permitted by controlling a movement device which is arranged between the frame and the distribution rod system (6),
**characterized**
**in that** the damping and/or prevention of the elastic bending of the distribution rod system (6) are caused by the dynamics of the field spray (1) and are carried out by changing the distance between the frame (3) and the distribution rod system (6).

12. Method according to Claim 11, **characterized in that** the damping and/or prevention of the elastic bending of the distribution rod system (6) are achieved by adjusting the distance between the distribution rod system (6) and the frame (3), said adjustment being implemented by regulating the spring base point position of a combination of a spring element (32) and a damp element (34) which is arranged between the distribution rod system (6) and frame (3).

13. Method according to at least one of Claims 11 or 12, **characterized in that** the distance between the distribution rod system (6) and the frame (3) is adjusted using acceleration data and/or speed data of the field spray (1) and/or of the distribution rod system (6) and/or of the traction vehicle (2).

14. Method according to at least one of Claims 11 to 13, **characterized in that** the degree and/or frequency of the bending and/or oscillation of the distribution rod system (6) are determined using acceleration data recorded on the distribution rod system booms, preferably in the vicinity of the outermost end of the booms, and at least approximately in the centre of the rod system or on the frame or on the field spray (1), and this information can be used to regulate the distance between the distribution rod system (6) and the frame (3).

15. Method according to at least one of Claims 13 or 14, **characterized in that** the distance between the distribution rod system (6) and the frame (3) is regulated using speed data of the field spray (1) and/or of a traction vehicle (2) and the comparison of said data with a stored setpoint speed.

16. Method according to at least one of Claims 11 to 15, **characterized in that** the shifting of the distribution rod system (6) relative to the frame (3) is the single degree of freedom of the distribution rod system (6).

17. Method according to at least one of Claims 11 to 15, **characterized in that** the distribution rod system (6) is arranged so as to be shiftable along an axis lying in the direction of travel and is mounted so as to be additionally rotatable about this axis.

18. Method according to at least one of Claims 11-15,
**characterized in that** in addition to the distance of the distribution rod system (6) from the frame (3), the distribution rod system (6) can additionally be rotated about an axis lying in the direction of travel and an axis lying perpendicularly with respect thereto.

## Revendications

1. Rampe distributrice (6) pour un pulvérisateur agricole (1), qui présente une étendue perpendiculaire à la direction de conduite et qui est supportée de manière déplaçable au moyen d'un dispositif de suspension (5) permettant un déplacement de l'ensemble de la rampe distributrice (6) au moins approximativement dans la direction de conduite par rapport au châssis (3) sur lequel elle est fixée, un dispositif de déplacement pour l'amortissement et/ou la suppression de flexions élastiques de la rampe se produisant au moins approximativement dans la direction de conduite étant disposé entre le châssis et la rampe distributrice,
**caractérisée en ce**
**qu'**un ou plusieurs actionneurs disposés entre le châssis (3) et la rampe distributrice (6) sont prévus, lesquels provoquent l'amortissement et/ou la suppression de la déformation élastique de la rampe distributrice (6) provoquée par la dynamique du pulvérisateur agricole, au moyen d'une variation de distance entre la rampe distributrice (6) et le châssis (3).

2. Rampe distributrice selon la revendication 1,
**caractérisée en ce qu'**une combinaison d'un élément de ressort (32) et d'un élément d'amortissement (34) disposée entre la rampe distributrice (6) et le châssis (3) est prévue, laquelle provoque l'amortissement et/ou la suppression de la déformation élastique de la rampe distributrice (6) par l'ajustement de la distance entre la rampe distributrice et le châssis (3), réalisée par une régulation de la position du point de base du ressort.

3. Rampe distributrice selon au moins l'une quelconque des revendications 1 ou 2, **caractérisée en ce que** des capteurs (7) disposés au niveau de la rampe distributrice et/ou du châssis et/ou du pulvérisateur agricole (1) et/ou du véhicule tracteur (2) sont prévus de telle sorte que la régulation de la distance entre la rampe distributrice (6) et le châssis (3) puisse être effectuée à l'aide de données d'accélération et/ou de données de vitesses détectées au moyen des capteurs du pulvérisateur agricole (1) et/ou de la rampe distributrice (6) et/ou du véhicule tracteur (2).

4. Rampe distributrice selon au moins l'une quelconque des revendications 1 à 3, **caractérisée en ce que** des capteurs d'accélération ou des jauges de contraintes qui sont montés au niveau des bras de la rampe distributrice, de préférence à proximité de l'extrémité la plus extérieure des bras, et au moins approximativement au centre de la rampe ou au niveau du châssis ou au niveau du pulvérisateur agricole, déterminent l'intensité et/ou la fréquence de la flexion et/ou de l'oscillation de la rampe distributrice (6), et cette information peut être utilisée pour la régulation de la distance entre la rampe distributrice (6) et le châssis (3).

5. Rampe distributrice selon au moins l'une quelconque des revendications 3 ou 4, **caractérisée en ce que** des capteurs pour détecter des données de vitesse du pulvérisateur agricole/d'un véhicule tracteur sont disposés au niveau du pulvérisateur agricole (1) ou du véhicule tracteur (2), et la distance entre la rampe distributrice (6) et le châssis (3) peut être régulée au moyen de ces données et par comparaison de celles-ci avec une vitesse de consigne enregistrée.

6. Rampe distributrice selon au moins l'une quelconque des revendications précédentes, **caractérisée en ce que** la rampe distributrice est réalisée de telle sorte que le déplacement de la rampe distributrice (6) par rapport au châssis (3) soit le seul degré de liberté de la rampe distributrice (6).

7. Rampe distributrice selon au moins l'une quelconque des revendications 1 à 5, **caractérisée en ce que** la rampe distributrice (6) est disposée de manière déplaçable le long d'un axe situé dans la direction de conduite et est en outre supportée à rotation autour de cet axe.

8. Rampe distributrice selon au moins l'une quelconque des revendications 1 à 5, **caractérisée en ce que** la rampe distributrice est réalisée de telle sorte qu'en plus de la distance de la rampe distributrice (6) par rapport au châssis (3), la rotation de la rampe distributrice autour d'un axe situé dans la direction de conduite et autour d'un axe situé perpendiculairement à celle-ci soit possible.

9. Rampe distributrice selon la revendication 9,
**caractérisée en ce qu'**une suspension pendulaire (71) et trois cylindres à double action (75) sont prévus, lesquels transmettent le mouvement de translation et de rotation.

10. Rampe distributrice selon au moins l'une quelconque des revendications précédentes, **caractérisée en ce que** le dispositif de suspension constitue en même temps le dispositif de déplacement, en particulier, dans un agencement constitué de six cylindres hydrauliques, qui permet en tant qu'hexapode trois degrés de liberté de translation et 3 degrés de liberté de rotation.

11. Procédé pour la commande du déplacement d'une rampe distributrice (6) d'un pulvérisateur agricole (1) qui présente une étendue perpendiculairement à la direction de conduite et qui est supporté, au moyen d'un dispositif de suspension (5) permettant un déplacement de l'ensemble de la rampe distributrice (6) au moins approximativement dans la direction de conduite, de manière déplaçable par rapport au châssis (3) auquel il est fixé, un amortissement et/ou une suppression des flexions élastiques de la rampe se produisant au moins approximativement dans la direction de conduite étant possible à l'aide d'une commande d'un dispositif de déplacement disposé entre le châssis et la rampe distributrice (6),
**caractérisé en ce que**
l'amortissement et/ou la suppression de la déformation élastique de la rampe distributrice (6), provoqués par la dynamique du pulvérisateur agricole (1), s'effectuent au moyen d'une variation de la distance entre le châssis (3) et la rampe distributrice (6).

12. Procédé selon la revendication 11, **caractérisé en ce que** l'amortissement et/ou la suppression de la déformation élastique de la rampe distributrice (6) sont réalisés par l'ajustement de la distance entre la rampe distributrice (6) et le châssis (3), réalisé au moyen d'une régulation de la position du point de base d'une combinaison d'un élément de ressort (32) et d'un élément d'amortissement (34) disposée entre la rampe distributrice (6) et le châssis (3).

13. Procédé selon au moins l'une quelconque des revendications 11 ou 12, **caractérisé en ce que** la distance entre la rampe distributrice (6) et le châssis (3) est ajustée à l'aide de données d'accélération et/ou de données de vitesse du pulvérisateur agricole (1) et/ou de la rampe distributrice (6) et/ou du véhicule tracteur (2).

14. Procédé selon au moins l'une quelconque des revendications 11 à 13, **caractérisé en ce que** l'intensité et/ou la fréquence de la flexion et/ou de l'oscillation de la rampe distributrice (6) sont déterminées à l'aide de données d'accélération, enregistrées au niveau des bras de la rampe distributrice, de préférence à proximité de l'extrémité la plus extérieure des bras, et au moins approximativement au centre de la rampe ou au niveau du châssis ou au niveau du pulvérisateur agricole (1), et cette information peut être utilisée pour la régulation de la distance entre la rampe distributrice (6) et le châssis (3).

15. Procédé selon au moins l'une quelconque des revendications 13 ou 14, **caractérisé en ce que** la distance entre la rampe distributrice (6) et le châssis (3) est régulée à l'aide de données de vitesse du pulvérisateur agricole (1) et/ou d'un véhicule tracteur (2) et de la comparaison de celles-ci avec une vitesse de consigne enregistrée.

16. Procédé selon au moins l'une quelconque des revendications 11 à 15, **caractérisé en ce que** le déplacement de la rampe distributrice (6) par rapport au châssis (3) est le seul degré de liberté de la rampe distributrice (6).

17. Procédé selon au moins l'une quelconque des revendications 11 à 15, **caractérisé en ce que** la rampe distributrice (6) est disposée de manière déplaçable le long d'un axe situé dans la direction de conduite et est en outre supportée à rotation autour de cet axe.

18. Procédé selon au moins l'une quelconque des revendications 11 à 15, **caractérisé en ce qu'**en plus de la distance de la rampe distributrice (6) par rapport au châssis (3), la rotation de la rampe distributrice (6) autour d'un axe situé dans la direction de conduite et autour d'un axe situé perpendiculairement à celle-ci soit possible.
